# EUROPÄISCHE PATENTANMELDUNG

(11) **EP 3 992 117 A1**
(43) Veröffentlichungstag der Anmeldung: **04.05.2022**
(21) Anmeldenummer: 21205600.6
(22) Anmeldetag: 29.10.2021
(51) Int. Cl.: B65G 1/04

(54) **VORRICHTUNG UND VERFAHREN ZUM BEWEGEN VON WARE IN EINEM AUTOMATISCHEN WARENLAGER**

(30) Priorität: 30.10.2020 DE 102020006668
(71) Anmelder: SMARK GmbH, 70174 Stuttgart (DE)
(72) Erfinder: EHRET, M, 70188 Stuttgart (DE); HOENING, P, 70176 Stuttgart (DE)
(74) Vertreter: König, Gregor Sebastian

(57) **Zusammenfassung**

Die Erfindung betrifft eine Vorrichtung (1) zum Bewegen von Ware (6) in einem automatischen Warenlager, wobei die Vorrichtung einen Manipulator (9) zum Bewegen von Ware und eine Plattform (8) zur Ablage von Ware aufweist, wobei die Vorrichtung ausgestaltet ist, a) den Manipulator und die Plattform gemeinsam zu bewegen und b) den Manipulator relativ zur Plattform in einer Richtung zu bewegen, die eine Komponente in Richtung einer Flächennormalen der Plattform aufweist.

## Beschreibung

Die Erfindung betrifft eine Vorrichtung zum Bewegen von Ware in einem automatischen Warenlager, wobei die Vorrichtung einen Manipulator zum Bewegen von Ware und eine Plattform zur Ablage von Ware aufweist, und ein Verfahren zum Bewegen von Ware in einem automatischen Warenlager, wobei die Ware mittels einer Vorrichtung bewegt wird, die einen Manipulator zum Bewegen von Ware und eine Plattform zur Ablage von Ware aufweist.

Im Bereich von Kommissioniervorrichtungen, d.h. einer Vorrichtung zum Ein- und Auslagern von Artikeln, ist es bekannt, Regale in einem Warenlager zur Lagerung von Ware vorzusehen. Die Ware wird in dem Warenlager mittels eines Manipulators, der vielfältig ausgestaltet sein kann, bewegt. Mittels des Manipulators kann die Ware beispielsweise von einem Einlagerbereich zum Regal bewegt und in dem Regal abgelegt werden. Der Manipulator kann auch verwendet werden, um die Ware aus dem Regal herauszuziehen und zu einem Auslagerbereich zu bewegen.

Aus EP 2 620 391 B1 ist eine Apothekenkommissioniervorrichtung mit zumindest einer Regalreihe mit sich in horizontal erstreckenden Regalböden bekannt. Die Apothekenkommissioniervorrichtung weist ein vor der Regalreihe horizontal und vertikal verfahrbares Bediengerät auf, wobei das Bediengerät eine Greifvorrichtung bzw. einen Greifer zum Ein- und/oder Auslagern von Arzneimittelpackungen auf die bzw. von den Regalböden, einen Sensor sowie eine Auflage mit einer Auflagefläche umfasst. Sobald eine Regalposition von dem Bediengerät angefahren ist, wird mit der Greifvorrichtung die Arzneimittelpackung auf dem der Regalposition zugehörigen Regalboden in Richtung auf die Auflage der Greifvorrichtung bewegt. Bei Verwendung eines Backengreifers wird die Arzneimittelpackung mit den Klemmbacken geklemmt und auf die Auflage gezogen. Es wird geprüft, ob die Arzneimittelpackung vollständig auf die Auflage bewegt ist. Ist die Arzneimittelpackung auf die Auflage bewegt, kann die Arzneimittelpackung mit dem Bediengerät zur Ausgabestelle der Apothekenkommissioniervorrichtung transportiert werden. Wenn die Prüfung jedoch negativ ausfällt, d.h. die Arzneimittelpackung nicht vollständig auf die Ablage bewegt ist, wird mit dem Sensor des Bediengerätes eine Kante (Oberkante oder Unterkante) des Regalbodens, auf welchem die Arzneimittelpackung gelagert ist, ermittelt und das Bediengerät zu einer entsprechenden korrigierten Regalposition verfahren (bei welcher problemlos ausgelagert werden kann). Die Prüfung kann beispielsweise bei der (versuchten) Bewegung der Arzneimittelpackung auf die Auflage geschehen. Sollten die Greifeinrichtungen der Greifvorrichtung bei dem Bewegen der Arzneimittelpackung in Richtung auf die Auflage nicht vollständig zurückgezogen worden sein, werden die Greifeinrichtungen vor dem Verfahren des Bediengerätes an die korrigierte Regalposition vollständig zurückgefahren, so dass eine freie Bewegung des Bediengerätes möglich ist. Bei dieser korrigierten Regalposition sind die Oberfläche des Regalbodens sowie die Auflagefläche der Auflage derart zueinander ausgerichtet, dass eine problemlose Bewegung von dem Regalboden auf die Auflage möglich ist, ohne dass die Stirnfläche der Auflage einen Anschlag für die Arzneimittelpackung bildet. Üblicherweise wird die Regalposition derart gewählt, dass die Oberfläche des Regalbodens horizontal mit der Auflagefläche der Auflage fluchtet oder die Auflagefläche der Auflage geringfügig unterhalb der Oberfläche des Regalbodens angeordnet ist.

Ausgehend vom Stand der Technik liegt der Erfindung die Aufgabe zugrunde, eine Vorrichtung zum Bewegen von Ware in einem automatischen Warenlager und ein Verfahren zum Bewegen von Ware in einem automatischen Warenlager so weiterzuentwickeln, dass diese bzw. dieses effizienter und/oder wirtschaftlicher betrieben werden kann.

Diese Aufgabe wird durch die Gegenstände der unabhängigen Patentansprüche gelöst. Vorteilhafte Ausführungsformen sind Gegenstand der jeweiligen abhängigen Patentansprüche und ergeben sich aus der Beschreibung.

Ein Kerngedanke der Erfindung ist, bei einer Vorrichtung bzw. einem Verfahren zum Bewegen von Ware in einem automatischen Warenlager mindestens eine relative Bewegungsmöglichkeit zwischen einer Plattform und einem Manipulator der Vorrichtung zu schaffen, die ein Anheben oder Absenken der Ware gegenüber der Plattform ermöglicht. Der Manipulator kann sowohl zusammen mit der Plattform zur Auflage bzw. Ablage der Ware bewegt werden können, um bspw. eine Ware über eine größere Distanz zwischen dem Regal und einem Einlagerfenster/Auslagerfenster zu bewegen, als auch in der Höhe gegenüber der Plattform bewegt werden können. Bei der Relativbewegung des Manipulators zur Plattform kann sich der Manipulator in einer Richtung zur Plattform bewegen, die eine Komponente in Richtung einer Flächennormalen der Plattform aufweist. Eine Ware kann nicht nur in Richtung auf die Plattform gezogen bzw. von dieser weg geschoben werden, sondern ein Anheben oder Absenken der Ware auf die Plattform und/oder vom Regalboden oder einer sonstigen Ablagefläche für die Ware ist möglich.

Es kann sich ein effizienterer und wirtschaftlicherer Betrieb ergeben, da mit der Vorrichtung bzw. dem Verfahren eine schnellere Bewegung aus bzw. in das Regal ermöglicht werden kann. Ein genaues Anfahren eines Niveaus in Bezug zu der Plattform ist nicht notwendig. Insbesondere kann die aus dem Stand der Technik bekannte Nivellierung von Plattform und Regalboden, die mit Zeitaufwand verbunden ist, entfallen. Es ist zudem mittels der Bewegung zwischen Plattform und Manipulator möglich, zu verhindern, dass eine sehr leichte Ware, beispielsweise eine Zigarettenpackung, beim Ablegen im Regal oder einer Ausgabe an dem Manipulator, insbesondere einer Backe eines als Backengreifers ausgestalteten Manipulators, haften bleibt, was beispielsweise durch vorhandene Feuchtigkeit oder eine statische Aufladung, passieren kann. Durch ein Auseinanderfahren der Backen, sofern der Manipulator als Backengreifer ausgestaltet ist, können die Backen gegenüber der Ware verschoben/weggezogen werden; es kann beim Ablegen der Ware eine Art "Abstreifbewegung" ermöglicht werden. Die Kraft des Manipulators auf die Ware kann reduziert werden; im Falle eines Backengreifers können die Backen im Wesentlichen gleichzeitig nach unten und auseinander fahren, wodurch der zusätzliche Effekt einer Abstreifbewegung der Ware erzielt werden kann. Mit dem Vorsehen der Plattform kann zudem eine sichere Bewegung der Ware erreicht werden, da eine Unterstützung der Ware bei der Bewegung von Manipulator und Plattform zusammen möglich ist.

Die Erfindung schafft eine Vorrichtung zum Bewegen von Ware in einem automatischen Warenlager. Die Vorrichtung weist einen Manipulator zum Bewegen von Ware und eine Plattform zur Ablage von Ware auf. Die Vorrichtung ist ausgestaltet, a) den Manipulator und die Plattform gemeinsam zu bewegen und b) den Manipulator relativ zur Plattform in einer Richtung zu bewegen, die eine Komponente in Richtung einer Flächennormalen der Plattform aufweist.

Bei der relativen Bewegung des Manipulators zur Plattform in einer Richtung, die eine Komponente in Richtung einer Flächennormalen der Plattform aufweist, kann es vorgesehen sein, dass sich der Manipulator und/oder die Plattform bewegt. Eine Bewegung beider Elemente ist nicht ausgeschlossen, wobei aus Gründen der Stabilität und der Flexibilität insbesondere bei der Aufnahme einer Ware mittels des Manipulators zumindest eine Bewegung des Manipulators in Richtung einer Flächennormale der Plattform bevorzugt ist und ganz besonders bevorzugt die Plattform in Ruhe verbleibt. In einer besonders bevorzugten Ausführungsform ist die Plattform unbewegbar ausgestaltet und kann an einer Transporteinrichtung unbeweglich befestigt sein, wobei die Transporteinrichtung im Raum verfahren werden kann.

Im Sinne der Beschreibung ist ein automatisches Warenlager ein umschlossener Raum, der Ware, die in einem Regal angeordnet ist, enthält.

Die Vorrichtung kann Teil eines Regalbediengeräts sein. Insbesondere kann die Vorrichtung als Teil des Regalbediengeräts entlang eines Regals horizontal und vertikal verfahrbar sein. Plattform und Manipulator können zusammen entsprechend verfahren werden, um beispielsweise eine Regalposition anfahren zu können, um eine Ware aus bzw. in das Regal bewegen zu können. Der Begriff Regalbediengerät kann mehr als die Vorrichtung umfassen, indem bspw. das Regalbediengerät auch eine Steuerung zum Steuern desselben umfassen kann. Das Regalbediengerät kann auch eine Transfereinrichtung umfassen, an der die Vorrichtung befestigt sein kann. Mittels der Transfereinrichtung kann die Vorrichtung durch das Warenlager; insbesondere vor dem Regal horizontal, und/oder vertikal verfahren werden.

Manipulator und Plattform können an einer Säule, die Teil einer Transfereinrichtung sein kann, angeordnet bzw. angelenkt sein. Es kann vorgesehen sein, dass der Manipulator an der Säule, insbesondere in einer Richtung der Längsachse der Säule, bewegt werden kann. Es kann vorgesehen sein, dass die Plattform an der Säule, insbesondere in einer Richtung längs der Längsachse der Säule, bewegt werden kann. Alternativ ist es möglich, dass die Plattform starr bzw. unbeweglich an der Säule befestigt ist. Die angegebene Richtung, in der Manipulator und Plattform relativ zueinander bewegt werden können, kann so verstanden werden, dass die Plattform bzw. der Manipulator in Richtung auf den Manipulator bzw. die Plattform oder von diesem bzw. dieser weg bewegt werden kann. Sofern angegeben ist, dass die Bewegungsrichtung eine Komponente in Richtung einer Flächennormalen der Plattform aufweist, so ist hierunter zu verstehen, dass es sich nicht notwendigerweise um eine geradlinige, eindimensionale, nur in einer Raumrichtung, nämlich der Flächennormalen der Plattform, gerichtete Bewegung handelt, sondern es kann auch eine kombinierte Bewegung, d.h. zusätzlich eine Bewegungskomponente in einer anderen Raumrichtung, vorliegen.

Es kann vorgesehen sein, dass die Plattform an der Säule, insbesondere vertikal, verfahren werden kann und der Manipulator mit der Plattform verbunden ist, so dass der Manipulator mittelbar - über die Plattform - mit der Säule verbunden ist. Die Plattform kann längs der Säule verfahren werden, beispielsweise mittels eines Schienensystems. Der Manipulator kann an einer an der Plattform ausgebildeten bzw. mit der Plattform starr verbundenen weiteren Säule, insbesondere vertikal, verfahren werden. Der Manipulator kann längs der weiteren Säule verfahren werden, beispielsweise mittels eines Schienensystems.

Sofern die Vorrichtung an einer Säule befestigt ist, kann vorgesehen sein, dass die Säule in horizontaler Richtung entlang der Regalböden verfahren kann. Es kann alternativ oder zusätzlich vorgesehen sein, dass die Säule vertikal in Bezug auf die Regalböden verfahren werden kann; alternativ oder zusätzlich ist es möglich, dass die Plattform zusammen mit dem Manipulator entlang der Säule, die sich über mehrere Regalböden erstrecken kann, gemeinsam verfahren kann. Die Säule kann eine definierte Möglichkeit bieten, wie Manipulator und Plattform relativ zueinander bewegt werden können, insbesondere, um eine Ablageposition einer Ware im Regal anzufahren. Bei einer Ausrichtung der Säule derart, dass die Längsachse der Säule im Wesentlichen parallel zur Flächennormale der Plattform und/oder der Flächennormale eines Regalbodens ausgerichtet ist, können definierte Bedingungen geschaffen werden, wie die Vorrichtung im automatischen Warenlager, insbesondere entlang der Regalböden, bewegt werden kann.

Bei dem Manipulator kann es sich insbesondere um jedwede Einrichtung zum Erfassen, Halten und/oder Ablegen einer Ware bzw. eines Guts handeln. Insbesondere kann es sich bei dem Manipulator um eine Einrichtung handeln, welche mechanisch, pneumatisch, magnetisch oder adhäsiv mit der Ware bzw. dem Gut zusammenwirken kann. Bei dem Manipulator kann es sich um eine Einrichtung handeln, welche einen Parallel-, Radial-, Winkel-, Dreipunkt- und/oder Sauggreifer umfasst. In einer bevorzugten Ausführungsform kann der Manipulator ein mechanischer Greifer, insbesondere ein Klemmgreifer, ganz besonders bevorzugt ein Backengreifer, sein.

Der Manipulator kann insbesondere in üblicher Weise in einer Richtung, in der sich die Plattform, bevorzugt von der Säule, erstreckt, verfahren werden. Insbesondere kann der Manipulator über die Plattform von einer Säule bzw. Transfereinrichtung weg bewegt werden, um beispielsweise die Backen bzw. Klemmen, sofern der Manipulator, als Backen- oder Klemmgreifer ausgestaltet ist, in den Wirkungsbereich eines Regalbodens zu verfahren. Derart kann die Vorrichtung an eine Regalposition verfahren werden, dass eine von der Vorrichtung gehaltene bzw. bewegte Ware in das Regal verfahren werden kann oder aus dem Regal auf die Plattform bewegt werden, nachdem die Ware von dem Manipulator erfasst bzw. gegriffen wurde.

Es kann vorgesehen sein, dass der Manipulator zusätzlich in einer Richtung quer zur Flächennormalen der Plattform bewegt werden kann, die nicht nach vorne gerichtet ist, d.h. sich nicht von einer Säule weg erstreckt, sondern in einer Richtung seitlich von der Plattform, so dass bspw. bei einem als Klemm- oder Backengreifer ausgestalteten Manipulator sich mindestens einer der Klemmen bzw. Backen über die Plattform bewegen kann. Hierdurch kann ein weiterer Freiheitsgrad zur Handhabung der Ware durch die Vorrichtung bzw. das Regalbediengerät ermöglicht werden.

Plattform und Manipulator können sich von der Säule in Richtung der Regalböden erstrecken. Mit der Säule kann der Manipulator mittelbar über die Plattform oder unmittelbar verbunden sein. Es kann vorgesehen sein, dass an der Plattform, insbesondere sofern es sich bei dem Manipulator um einen Backen- oder Klemmgreifer handelt, die Mechanik vorgesehen ist, mittels derer die Backen bzw. Klemmen aufeinander zubewegt werden können. Es kann vorgesehen, dass an der Säule, insbesondere sofern es sich bei dem Manipulator um einen Backen- oder Klemmgreifer handelt, im Bereich der Verbindung zwischen Säule und Manipulator die Mechanik vorgesehen ist, mittels derer die Backen bzw. Klemmen aufeinander zubewegt werden können. Die Bewegung der Backen bzw. Klemmen des Backen- bzw. Klemmgreifers kann im Wesentlichen quer zur Flächennormalen der Plattform verlaufen.

Die Plattform kann eine Aufstandsfläche für die Ware bzw. das Gut aufweisen, die bevorzugt zumindest in einem Teilbereich im Wesentlichen plan oder eben ausgestaltet sein kann. Die Plattform kann insbesondere im Wirkungsbereich des Manipulators zur Handhabung von Ware bzw. Gut liegen. Insbesondere können sich Greifarme eines als mechanischer (Klemm- oder Backen-)Greifer ausgestalteten Manipulators rechts und links der Plattform und/oder über der Plattform erstrecken. Es kann vorgesehen sein, dass sich die Klemmen oder Backen eines als Klemm- oder Backengreifers ausgestalteten Manipulators von einer Säule erstrecken. Die Richtung in der sich die Klemmen bzw. Backen erstrecken kann mit der Flächennormalen der Plattform einen Winkel von nahezu 90° einschließen.

Sofern eine Ware von der Plattform beispielsweise auf einen Regalboden bewegt wird, so kann der Manipulator zunächst die Ware von der Plattform anheben, so dass die Ware zunächst geradlinig vom Manipulator angehoben werden kann; es kann aber auch vorgesehen sein, dass zusätzlich zum Anheben der Manipulator in Richtung auf den Regalboden verfahren werden kann. Das Ablegen auf dem Regalboden kann mittels eines Absenkens des Manipulators erfolgen, in dem die Ware mittels des Manipulators eine Bewegung erfährt, die eine Komponente in Richtung einer Flächennormalen des Regalbodens auf diesen zu aufweist.

Eine Bewegung einer Ware aus dem Regalboden mittels der Vorrichtung kann durch ein Anheben des zuvor in den Wirkungsbereich des Regalbodens verbrachten Manipulators erfolgen, indem die Klemmen bzw. Backen, sofern es sich bei dem Manipulator um einen Klemm- oder Backengreifer handelt, aufeinander zu bewegt werden und die Ware gehalten wird. Dann kann der Manipulator in einer Richtung, die eine Komponente in Richtung einer Flächennormalen des Regalbodens aufweist und parallel zur Flächennormalen der Plattform verläuft, nach oben verfahren werden. Der Manipulator kann dann weiter in Richtung der Säule bewegt werden und, wenn die Ware oberhalb der Plattform angeordnet ist, kann der Manipulator abgesenkt werden, so dass die Ware auf der Plattform aufliegt bzw. abgelegt ist.

In einer bevorzugten Ausführungsform ist die Bewegung des Manipulators relativ zur Plattform zumindest abschnittsweise bogenförmig, wodurch eine kombinierte Bewegung des Manipulators in Richtung auf die Ware zu bzw. auf den Regalboden zu möglich ist. Eine kombinierte Bewegung, die einer zumindest abschnittsweise bogenförmigen Bewegung umfasst, bietet den Vorteil eines Zeitgewinns, da eine schnellere Bewegung möglich ist.

In einer bevorzugten Ausführungsform weist der Manipulator einen Greifer auf, wodurch ein einfach ausgestalteter und hinsichtlich seiner Verwendung und/oder seiner Konstruktion bekannter Manipulator verwendet werden kann.

In einer bevorzugten Ausführungsform kann der Manipulator für ein Ausführen einer Bewegung ausgestaltet sein, die von einer translatorischen Bewegung abweicht, hierdurch kann ein weiterer Freiheitsgrad des Manipulators geschaffen werden, so dass beispielsweise eine Drehbewegung des Manipulators möglich ist, um die Ware beispielsweise, sofern erkannt wird, dass die Ware gedreht bzw. geneigt vorliegt, in die entsprechende Richtung zu drehen bzw. zu neigen. Insbesondere kann unter einer Bewegung, die von einer translatorischen Bewegung abweicht, eine Bewegung verstanden werden, bei der der Manipulator, sofern er als Klemm- oder Backengreifer ausgestaltet ist, hinsichtlich seiner Backen bzw. Klemmen im Raum um eine Achse gedreht werden kann. Es ist eine komplexe Bewegung der Ware möglich, mittels derer die Eigenschaft der Ware beim Handhaben, die Position der Ware, die Ausrichtung und/oder Lage der Ware berücksichtigt werden kann.

In einer bevorzugten Ausführungsform ist die Vorrichtung ausgestaltet, bei einer gemeinsamen Bewegung von Manipulator und Plattform eine Andruckkraft von dem Manipulator auf die Plattform auszuüben. Hierdurch kann die Möglichkeit geschaffen werden, dass eine zu bewegende Ware nicht nur mittels der Kraft, die der Manipulator an sich auf die Ware zum Handhaben derselben ausübt, bspw. eine Klemmkraft, die von einem Backengreifer bzw. einem Klemmgreifer zwischen den Klemmen bzw. den Backen ausgeübt wird, gehalten wird, sondern auch in einer durch die Plattform unterstützten Klemmung in Richtung der Flächennormalen der Plattform, die mittels eines Aufeinanderzubewegens ausgeübt werden kann. Es kann quasi die Möglichkeit vorgesehen werden, dass eine Ware mittels des Manipulators in Richtung der Flächennormalen der Plattform gedrückt wird, um einen erhöhten sicheren Transport bei der Bewegung der Ware zu erreichen.

In einer bevorzugten Ausführungsform ist die Vorrichtung mittels des Manipulators ausgestaltet, die Ware mittels einer Abstreifbewegung abzulegen. Die Ablage der Ware kann sowohl eine Ablage auf einem Regalboden bzw. einem Regal als auch die Ablage bei der Auslagerung betreffen. Bei der Abstreifbewegung des Manipulators kann es sich insbesondere um eine Bewegung mit der Ware handeln, bei der der Manipulator die Ware in Richtung auf die Ablage (Regalboden oder Auslagerungsbereich) mit einer Ablagekraft höher als die Gewichtskraft aufdrückt und teilweise unter Ausübung der Ablagekraft auf der Ablage bewegt. Die Abstreifbewegung kann eine Bewegung des Manipulators senkrecht bzw, mit einer Richtungskomponente senkrecht zur Flächennormalen der Ablage umfassen, in der der Manipulator die Ware freigibt, beispielsweise können im Falle eines Backengreifers die Backen geöffnet werden können.

Die Erfindung schafft auch ein Verfahren zum Bewegen von Ware in einem automatischen Warenlager, wobei die Ware mittels einer Vorrichtung bewegt wird, die einen Manipulator zum Bewegen von Ware und eine Plattform zur Ablage von Ware aufweist. Der Manipulator und die Plattform können zum einen gemeinsam bewegt werden und zum anderen kann der Manipulator relativ zur Plattform in einer Richtung bewegt werden, die eine Komponente aufweist, die mit der Richtung einer Flächennormalen der Plattform zusammenfällt.

In einer bevorzugten Ausführungsform wird die Ware mittels des Manipulators relativ zur Plattform zumindest abschnittsweise bogenförmig bewegt. Eine kürzere Strecke bei der Bewegung der Ware kann gegenüber einer rein geradlinigen Bewegung, die insbesondere zwei Bewegungen aufweist, die rechtwinklig zueinander verlaufen, erreicht werden.

In einer bevorzugten Ausführungsform wird die Ware von dem Manipulator um eine Achse, die durch die Ware verläuft, gedreht. Sofern der Manipulator als Klemm- oder Backengreifer ausgestaltet ist, kann die Drehachse im Wesentlichen parallel zu einer der Klemmen bzw. einer der Backen verlaufen. Mittels des Manipulators kann ein erweiterter Freiheitsgrad für die Bewegung der Ware und/oder eine ausgleichende Bewegung bei einer schief stehenden Ware bzw. einer geneigt stehenden Ware erreicht werden.

Es kann vorgesehen sein, dass die Plattform zusammen mit dem Manipulator an einer Säule derart gedreht werden kann, dass sich die Plattform vor der Drehung in eine Richtung erstrecken kann, die entgegen der Richtung ist, in der sich die Plattform nach der Drehung erstreckt. Die Plattform (mit dem Manipulator) kann sich dabei um die Längsachse einer Säule drehen. Die Plattform (mit dem Manipulator) kann um 180° gedreht werden. Es können mittels der Plattform und des Manipulators bei dieser möglichen Ausgestaltung der Drehung der Plattform (mit dem Manipulator) zwei gegenüberliegende Regale bzw. Regalböden bedient werden.

In einer bevorzugten Ausführungsform wird als Manipulator ein Greifer verwendet. Hierdurch kann auf einer Bauform eines Manipulators zurückgegriffen werden, die hinsichtlich Konstruktion, Bauweise und Gestaltung gut bekannt ist.

In einer bevorzugten Ausführungsform wird zwischen Manipulator und Plattform bei einer gemeinsamen Bewegung eine Andruckkraft ausgeübt, wodurch insbesondere ein sicherer Transport der Ware ermöglicht wird, indem neben einem Halten mittels des Manipulators eine Andruck- bzw. Klemmkraft zwischen Manipulator und Plattform ausgeübt werden kann.

In einer bevorzugten Ausführungsform kann der Manipulator eine Abstreifbewegung zum Ablegen der Ware ausführen. Das Ablegen der Ware kann sowohl eine Ablage auf einem Regalboden bzw. einem Regal als auch die Ablage bei der Auslagerung betreffen. Bei der Abstreifbewegung des Manipulators kann der Manipulator in einer Phase der Abstreifbewegung die Ware in Richtung auf die Ablage (Regalboden oder Auslagerungsbereich) mit einer Ablagekraft höher als die Gewichtskraft aufdrücken und teilweise unter Ausübung der Ablagekraft auf der Ablage bewegen. In einer Phase der Abstreifbewegung kann der Manipulator senkrecht bzw, mit einer Richtungskomponente senkrecht zur Flächennormalen der Ablage bewegt werden, wobei der Manipulator während dieser Bewegung die Ware freigibt, beispielsweise können im Falle eines Backengreifers die Backen geöffnet werden können.

Eine Steuerung kann eine gezielte Steuerung der Vorrichtung bzw. des Regalbediengeräts ermöglichen, wobei mehrere Vorrichtungen bzw. Regalbediengeräte vorgesehen sein können, die von einer Steuerung angesteuert werden können. Die Steuerung kann zudem ausgelegt sein, jeweils ein oder mehrere Einlagerfenster, Auslagerfenster, Einlagerterminals und/oder Auslagerterminals, die im Bereich des automatischen Warenlagers liegen bzw. Teil des automatischen Warenlagers sind, zu steuern.

Die Ware kann mittels eines oder mehrerer Einlagerfenster in das automatische Warenlager gelangen. Ferner kann das automatische Warenlager ein oder mehrere Auslagerfenster aufweisen, an denen Ware aus dem automatischen Warenlager ausgegeben werden kann. In der Regel weist das Einlagerfenster und das Auslagerfenster eine wahlweise abdeckbare und/oder verschließbare Öffnung auf, durch die Ware in das automatische Warenlager bzw. aus dem automatischen Warenlager gelangen kann. In einer Ausführungsform kann es vorgesehen sein, dass zumindest ein Einlagerfenster mit einem Auslagerfenster identisch sein kann. Zum Zwecke der Abdeckung und/oder des Verschlusses des Einlagerfensters und/oder des Auslagerfensters kann eine Türe, eine Klappe, ein Rollo, eine Jalousie oder ähnliches vorgesehen sein. Das Auslagerfenster und/oder das Einlagerfenster kann mittels einer von einer Klappe bedeckten Schublade oder einem trogförmigen Raum, der von einer Klappe oder einem Rollo bedeckt ist, zumindest teilweise gebildet werden.

Der Begriff "-fenster" umfasst im Sinne der Beschreibung eine nicht notwendigerweise vertikal ausgerichtete Öffnung. Es kann vorgesehen sein, dass eine horizontal ausgerichtete Öffnung bzw. eine Öffnung mit einer horizontal verlaufenden Komponente vorhanden ist, die sich einen Raum erstreckt, in den Ware abgelegt oder aus dem Ware entnommen werden kann.

Es kann vorgesehen sein, dass in dem Regal des automatischen Warenlagers, welches die Vorrichtung bzw. das Regalbediengerät umfassen kann, die Plätze auf Regalböden des Regals sowohl für Ware selbst als auch für Warenträger, auf bzw. in denen eine oder mehrere Waren angeordnet sein können, vergeben werden können. Die Steuerung der Vorrichtung bzw. des Regalbediengeräts kann derart ausgestaltet sein, die Ware einzeln oder auf bzw. in einem Warenträger im Regal abzulegen und/oder aufzunehmen. Das Regal kann sowohl für eine Lagerung der Ware, in dem diese einzeln auf einem Regalboden aufsteht, als auch für eine Lagerung von Ware, die auf bzw. in einem Warenträger vorliegt, dienen. Eine grundlegende flexible Handhabung ist möglich. Eine Beschleunigung des Ein- oder Auslagerns kann erreicht werden. Ferner ist mit der sich ergebenden Flexibilität eine Vergrößerung der für die Lagerung vorgesehenen Fläche bzw. des Volumens möglich, wobei eine einzelne Lagerung von Ware nicht ausgeschlossen ist. In dem Regal kann sowohl einzeln handhabbare Ware als auch an bzw. in einem Warenträger angeordnete Ware abgelegt werden. Die Ware kann einzeln oder zusammen mit dem Warenträger gehandhabt werden. Es kann auch vorgesehen sein, dass die Ware von dem Warenträger vereinzelt oder in, an und/oder auf dem Warenträger zu einem Warenkonvolut zusammengestellt werden kann.

Die Steuerung kann einen Speicher aufweisen, in dem Angaben über in dem Warenlager befindliche Ware, Warenträger und/oder Gut abgelegt ist. Mittels der Angaben in dem Speicher kann eine Identifizierung der Ware, des Warenträgers und des Guts erfolgen, wobei die der Ware, dem Warenträger bzw. dem Gut zugeordnete Position im Warenlager ebenfalls im Speicher abgelegt sein kann.

Ein Auslagerfenster kann insbesondere derart positioniert oder angeordnet sein und/oder im Bereich des Auslagerfensters kann es derart ausgestaltet sein, dass ein in das Auslagerfenster bewegter Warenträger von der Vorrichtung gehandhabt werden kann. Die Ware oder der Warenträger kann insbesondere von der Vorrichtung aufgenommen und wieder ins Regal auf einem Regalboden abgestellt werden, bspw. um wieder verwendet zu werden, insbesondere, wenn der die Ware anfordernde Benutzer auf die Mitnahme des Warenträgers verzichten möchte oder muss. Es ist alternativ oder zusätzlich möglich, dass die Ware bzw. der Warenträger im Bereich des Auslagerfensters nicht von der Vorrichtung gehandhabt werden kann, sondern mittels einer Transporteinrichtung wieder in den Handhabungsbereich der Vorrichtung verfahren werden muss, sofern die Ware oder der Warenträger im Auslagerfenster nicht entnommen wurde oder nicht entnommen werden kann. Die Transporteinrichtung kann die Ware oder den Warenträger in den Handhabungsbereich der Vorrichtung bewegen und diese kann die Ware oder den Warenträger in das Regal zurücklegen.

Es kann möglich sein, dass ein Warenträger nicht wieder dem Regal zugeführt wird, bspw., wenn festgestellt wird, dass der Warenträger verschmutzt, defekt oder in sonstiger Weise nicht mehr brauchbar ist. Es ist möglich, dass ein im Auslagerfenster befindlicher Warenträger zunächst nicht wieder in das Regal bewegt wird, sondern auf einen Beschickungsplatz, der dem Auslagerfenster vorgelagert ist und auf den ein Anwender nicht von außen zugreifen kann. Auf dem Beschickungsplatz kann der Warenträger wieder mit Ware versehen werden und dann ausgelagert oder wieder dem Regal zugeführt werden; hierdurch ergibt sich die Möglichkeit, den Warenträger wieder zu verwenden, ohne ihn zuvor in das Regal zu transportieren.

Der Zugang bzw. Zugriff auf den umschlossenen Raum kann reglementiert sein, damit nicht unautorisiert auf die in dem Warenlager befindliche Ware und/oder die Vorrichtung bzw. das Regalbediengerät zugegriffen werden kann. Es kann vorgesehen sein, dass der umschlossene Raum zumindest in einem Teilbereich eine Kühlung und/oder Klimatisierung mit einer Einstellung einer Luftfeuchte für die im Raum befindliche Luft aufweist, um an die Ware angepasste, verbesserte Lagerbedingungen zu schaffen.

Der umschlossene Raum kann mechanische und/oder elektrische bzw. elektronische Zu- oder Ableitungen aufweisen. Mittels der mechanischen Zu- oder Ableitungen kann eine Lüftung des umschlossenen Raums durchgeführt werden. Sofern Kühl- oder Klimatisierungsaggregate vorgesehen sind, kann die Luft in dem umschlossenen Raum zumindest in einem Teilbereich gekühlt oder klimatisiert werden, wobei im Falle einer Klimatisierung eine Einstellung der Luftfeuchte umfasst ist. Sofern mindestens ein Kühl- oder Klimatisierungsaggregat vorgesehen ist, kann das Kühl- oder Klimatisierungsaggregat Teil des umschlossenen Raums sein. Mittels der elektrischen Zuleitungen können elektrische Komponente des Warenlagers, insbesondere die Vorrichtung bzw. das Regalbediengerät und die Steuerung mit Strom versorgt werden. Mittels der elektronischen Zu- bzw. Ableitungen können elektronische Elemente des Warenlagers mit Signalen versorgt bzw. Signale von den elektronischen Komponenten nach außen gesendet werden. Es kann vorgesehen sein, dass der umschlossene Raum bis auf eine Zuleitung für Strom bzw. Spannung unabhängig bzw. autark ausgestaltet ist.

Das automatische Warenlager kann eine Schnittstelle aufweisen, die eine bidirektionale Kommunikation zwischen der Steuerung der Vorrichtung bzw. des Regalbediengeräts und möglichen weiteren elektronischen Komponenten des automatischen Warenlagers ermöglicht. Die Steuerung der Vorrichtung bzw. des Regalbediengeräts kann beispielsweise auch zur Steuerung weiterer elektrischer und/oder elektronischen Komponenten (bspw. Kühl- oder Klimaaggregat) verwendet werden. Es kann aber auch eine separate Steuerung für das automatische Warenlager vorgesehen sein, die die weiteren elektrischen und/oder elektronischen Komponenten, die in der Beschreibung genannt werden, steuert. Eine mögliche von der Steuerung der Vorrichtung bzw. des Regalbediengeräts separate Steuerung kann der Steuerung der Vorrichtung bzw. des Regalbediengeräts übergeordnet sein. Die Schnittstelle kann eine kabellose und/oder eine kabelgebundene Kommunikation ermöglichen. Mittels der Schnittstelle können Einstellungen der Steuerung(en) ausgelesen und/oder verändert werden.

Der umschlossene Raum kann stationär angeordnet sein oder mobil beweglich, beispielsweise auf einer Plattform eines Fahrzeugs, vorliegen.

Beim Einlagern kann die Vorrichtung bzw. das Regalbediengerät eine Ware und/oder einen Warenträger im Bereich des Einlagerfensters aufnehmen und dem Regal zuführen. Bei der Auslagerung kann die Vorrichtung bzw. das Regalbediengerät eine Ware und/oder einen Warenträger, der die Ware aufweist, im Regal aufnehmen und dem Auslagerfenster zuführen.

Im Bereich eines Einlagerfensters kann eine optische Einrichtung vorgesehen sein, die ausgerichtet und ausgestaltet ist, Bilder und/oder Filme von der einzulagernden Ware bzw. vom einzulagernden Gut aufnehmen zu können. Vorzugsweise können die Bilder und/oder Filme gespeichert werden, um klären zu können, ob, wann und/oder in welchem Zustand die Ware bzw. das Gut eingelagert wurde.

Es ist auch möglich, dass auf eine Einlagerung mittels eines Einlagerfensters verzichtet werden kann, wenn die Ware manuell über einen anderen Zugang in den umschlossenen Raum in das Regal eingebracht werden kann, bspw. durch einen Mitarbeiter, der die Ware in das Regal stellt; hierzu kann ein Zugang für den Mitarbeiter vorgesehen sein, der mittels einer Zugangsberechtigungseinrichtung gesperrt bzw. überwacht werden kann. Bei der Zugangsberechtigungseinrichtung kann es sich um einen (elektronischen) Schlüssel, eine Magnetkarte, eine RFID-Karte, eine Gesichts- und/oder Stimmerkennung oder ähnliches handeln.

Der umschlossene Raum kann eine Tür für Wartungsarbeiten aufweisen, um einem Servicemitarbeiter insbesondere einen Zugang zu dem Regal oder der Vorrichtung bzw. dem Regalbediengerät gewähren zu können.

Bei dem automatischen Warenlager kann es sich allgemein um ein Lager handeln, bei dem ein Kunde ein in dem Warenlager befindliches Gut anfordern und an einem Auslagerfenster entnehmen kann.

Bei der Ware kann es sich um jedes gegenständliche Gut handeln, insbesondere Lebensmittel, Genussmittel, Nahrungsmittel, Süßwaren, Drogerieartikel, Büromaterial oder andere Gebrauchs- oder Verbrauchsgüter. Eine Ware kann jedwede körperliche Ausgestaltung aufweisen, die eine handhabbare Erstreckung umfasst. Bei der Ware kann es sich auch um ein Gut bzw. eine Ware handeln, das bzw. die vor der Ausgabe gegenüber dem Zustand im Regal modifiziert ist, beispielsweise indem die Ware bzw. das Gut für eine Erzeugung eines Lebensmittels geöffnet (z.B. eine Flasche), geschält (z.B. Obst), befüllt (z.B. ein leeres Behältnis, bspw. ein Becher, wird mit einem Getränk, bspw. Kaffee oder Limonade, gefüllt oder eine Ware wird in einem Geschenkkorb platziert), verpackt (z.B. eine Ware wird in einen (Geschenk-)Karton, eine Kiste oder eine Tüte gepackt), aufgebrüht (z.B. Kaffee), erwärmt (z.B. gekühlte Kost auf Raumtemperatur erwärmen), erhitzt (z.B. Suppe) oder aufgebacken (z.B. Backware) wurde, bevor das modifizierte Gut bzw. die modifizierte Ware ausgegeben wird.

Das automatische Warenlager kann ein Verkaufsautomat sein, der Ware enthält, die ein Kunde auswählen, bezahlen und am Auslagerfenster übergeben bekommt.

Alternativ oder zusätzlich kann das automatische Warenlager ein Übergabeautomat oder Serviceautomat sein, mit dem sichergestellt werden kann, dass sich einlagernde und auslagernde Person nicht persönlich treffen bzw. begegnen müssen und trotzdem eine sichere Übergabe - gegebenenfalls mit zusätzlichen Bedingungen - erfolgen kann. Es kann beispielsweise alternativ oder zusätzlich zu der Funktion des Verkaufsautomaten vorgesehen sein, dass ein Unternehmen und/oder eine Privatperson die Möglichkeit erhalten, einen Gegenstand bzw. ein Gut in das automatische Warenlager einzulagern, und einer weiteren Person die Möglichkeit einräumen, den Gegenstand bzw. das Gut aus dem automatischen Warenlager zu erhalten. Bei dem Unternehmen oder der Privatperson kann es sich beispielsweise um einen Verkäufer einer Sache handeln, wobei die Einigung über den Verkauf und die Bezahlung schon erfolgt ist. Es kann alternativ oder zusätzlich vorgesehen sein, dass ein Brief-, Päckchen- oder Paketzusteller (zuzustellender Gegenstand) ferner die Möglichkeit erhält, das automatische Warenlager zu nutzen. Der Zusteller kann einen einem Empfänger zuzustellenden Gegenstand in dem Warenlager einlagern, damit der Empfänger sich den Gegenstand aus dem Warenlager abholen kann.

Es kann vorgesehen sein, dass das automatische Warenlager die Funktion eines Verkaufsautomaten hat und gleichzeitig den Käufern einer oder mehrerer Waren die Möglichkeit gegeben wird, dass Gegenstände für eine Übergabe und/oder zuzustellende Gegenstände aus dem Warenlager abgeholt werden können, sofern der Steuerung bei der Einlagerung mitteilt wird, dass eine bestimmte Person zur Auslagerung berechtigt ist.

Im Bereich eines Einlagerfensters kann ein von außen zugängliches Einlagerterminal vorgesehen sein, das erkennt, ob eine Person berechtigt ist, Ware bzw. einen Gegenstand in das automatische Warenlager einzulagern. Das Einlagerterminal kann ein Kartenlesegerät, einen optischen Scanner, einen elektronischen Sensor, eine Gesichts- und/oder Stimmerkennung oder ähnliches aufweisen. Wird erkannt, dass die Person zur Einlagerung von Ware bzw. eines Gegenstands berechtigt ist, kann durch eine Öffnung eine Ware bzw. ein Gut dem automatischen Warenlager zugeführt werden, indem die Vorrichtung bzw. das Regalbediengerät im Bereich des Einlagerfensters die Ware bzw. das Gut oder den Warenträger aufnimmt und dem Regal zuführt. Zwischen dem Einlagerfenster und einem Zugriffsbereich der Vorrichtung bzw. des Regalbediengeräts kann eine Fördereinrichtung vorgesehen sein, die die Ware bzw. das Gut zwischen dem Einlagerfenster und dem Zugriffsbereich der Vorrichtung bzw. des Regalbediengeräts bewegt. Die Fördereinrichtung kann als Förderband oder ähnliches ausgestaltet sein.

Zur Erkennung der Ware bzw. des Guts kann eine Erkennungseinrichtung vorgesehen sein, die insbesondere an der Vorrichtung bzw. am Regalbediengerät angeordnet sein kann, um zu erkennen, um welche Ware bzw. welches Gut es sich handelt. Die Erkennungseinrichtung kann ausgestaltet sein, die Größe, Form, Geometrie und/oder das Gewicht der Ware bzw. des Guts zu ermitteln, zu erfassen bzw. zu erkennen. Hierdurch kann festgestellt werden, ob die einzulagernde Ware bzw. das einzulagernde Gut oder ein Warenträger mittels der Vorrichtung bzw. des Regalbediengeräts gehandhabt werden kann. Es kann alternativ oder zusätzlich festgestellt werden, ob die Ware bzw. das Gut oder der Warenträger eine Größe bzw. ein Volumen aufweist, die bzw. das eine Einlagerung im Regal ermöglicht, bspw. weil die Regalböden einen ausreichenden Abstand in der Höhe haben und/oder auf einem Regalboden noch ausreichend Fläche vorhanden ist. Die Erkennungseinrichtung kann ausgestaltet sein, einen an der Ware bzw. dem Gut angeordneten (Strich-)Code zu erkennen. Alternativ oder zusätzlich kann vorgesehen sein, dass die die Ware bzw. das Gut oder den Warenträger einlagernde Person Angaben über die Ware bzw. das Gut oder den Warenträger machen kann. Die Angaben über die Ware bzw. das Gut können insbesondere Informationen zur Identifizierung der Ware bzw. des Guts sein. Die einlagernde Person kann insbesondere bei einem Verkaufsautomaten Angaben dazu machen, welche Ware eingelagert wird. Die einlagernde Person kann alternativ oder zusätzlich Angaben dazu machen, zu welchem Preis die Ware bzw. das Gut verkauft werden und dann ausgelagert werden soll. Sofern das automatische Warenlager alternativ oder zusätzlich als Servicestation für eine Einlagerung und Auslagerung von Gegenständen verwendet werden kann, kann die einlagernde Person Angaben zum Empfänger bzw. der Person bzw. dem Personenkreis machen, dem die Ware bzw. das Gut ausgegeben werden darf.

Ein Einlagerterminal im Bereich eines Einlagerfensters kann für mögliche Eingaben einer einlagernden Person eine optische Erkennungseinheit, eine Tastatur, eine Anzeige, einen Bildschirm, eine Eingabemöglichkeit mittels einer Maus, eines Touchpads, eines Touchscreens und/oder eines Trackballs oder ähnlichem aufweisen. Es kann ferner eine elektronische kabelgebundene oder kabellose Schnittstelle vorgesehen sein, mittels derer eine einlagernde Person elektronische Informationen an die Steuerung des automatischen Warenlagers übergeben kann, um Informationen zur einzulagernden Ware bzw. Gut zu machen. Mittels der Schnittstelle kann auch eine bidirektionale Kommunikation mit der einlagernden Person durchgeführt werden, indem der Person, die sich identifiziert hat, mitgeteilt wird, welche und wie viele Waren bzw. Güter, die die Person zuvor schon eingelagert hatte, ausgelagert worden sind. Alternativ oder zusätzlich kann einer einlagernden Person auch kabellos eine Information auf ein Endgerät übermittelt werden, die angibt, welche und wie viele Waren bzw. Güter ausgegeben wurden und/oder welche Ware bzw. Güter noch im automatischen Warenlager vorhanden sind.

Im Bereich eines Auslagerfensters kann eine optische Einrichtung vorgesehen sein, die ausgerichtet und ausgestaltet ist, Bilder und/oder Filme von der auszulagernden Ware bzw. vom auszulagernden Gut aufnehmen zu können. Vorzugsweise können die Bilder und/oder Filme gespeichert werden, um zu klären, ob, wann und/oder in welchem Zustand die Ware bzw. das Gut ausgegeben wurde.

Im Bereich eines Auslagerfensters kann ein Auslagerterminal vorgesehen sein, das eine Identifikation einer Person ermöglicht. Die Einrichtung kann alternativ oder zusätzlich für die Autorisierung einer Bezahlung, insbesondere der auszulagernden Ware, ausgestaltet sein. Beispielsweise kann an dem Auslagerfenster ein Auslagerterminal mit Bezahlfunktion zur Bezahlung der Ware bzw. Guts, welche(s) von einer Person für eine Auslagerung angefordert werden, vorgesehen sein.

Ein Auslagerterminal kann ein Kartenlesegerät, einen optischen Scanner, einen elektronischen Sensor, eine Gesichts- und/oder Stimmerkennung oder ähnliches aufweisen. Wird erkannt, dass die Person zur Auslagerung von Ware bzw. eines Gegenstands berechtigt ist, kann durch das geöffnete Auslagerfenster die Ware bzw. das Gut dem automatischen Warenlager entnommen werden, indem zuvor die Vorrichtung bzw. das Regalbediengerät die Ware bzw. das Gut vom Regal aufgenommen und einem Ablagebereich im Bereich des Auslagerfenster abgelegt hat.

Zwischen dem Auslagerfenster und dem Ablagebereich der Vorrichtung bzw. des Regalbediengeräts kann eine Fallstrecke, ein Fallschacht oder eine Fördereinrichtung vorgesehen sein, entlang der bzw. dem die Ware bzw. das Gut zwischen dem Ablagebereich und dem Auslagerfenster bewegt wird. Die Fördereinrichtung kann als Förderband oder ähnliches ausgestaltet sein. Der Ablagebereich der Vorrichtung bzw. des Regalbediengeräts kann alternativ direkt in einem Zugriffsbereich von außen vorliegen.

Die Anforderung der Ware durch die Person kann vor der Auslagerung mittels einer an die Steuerung des automatischen Warenlagers übermittelten Bestellung in Form einer Anforderung von Ware aus dem Warenlager geschehen, die beispielsweise mittels einer auf einem Smartphone ablaufenden App, eines Computers oder ähnlichem vorgenommen wird.

Ein Auslagerterminal im Bereich eines Auslagerfensters kann für mögliche Eingaben einer Person, die Ware ausgelagert haben möchte, eine optische Erkennungseinheit, eine Tastatur, eine Anzeige, einen Bildschirm, eine Eingabemöglichkeit mittels einer Maus, eines Touchpads, eines Touchscreens und/oder eines Trackballs oder ähnlichem aufweisen. Mittels der Eingabe kann Ware angefordert werden. Es kann eine Kommunikation mit der Person durchgeführt werden, in der die Person die auszulagernde Ware auswählt und bezahlt. Es ist aber alternativ oder zusätzlich möglich, dass das Auslagerungsterminal lediglich die Peron oder eine Berechtigung erkennt, die die Ausgabe der entsprechenden Ware auslöst.

Der Begriff Steuerung umfasst eine elektronische Einheit, die eine in einem Speicher abgelegte Befehlsreihenfolge, insbesondere in Form eines Programms, abarbeiten kann, um den Betrieb der Vorrichtung bzw. des Regalbediengeräts und/oder des automatischen Warenlagers zu ermöglichen. Insbesondere kann die Steuerung eine Befehlsfolge umfassen, die die Vorrichtung bzw. das Regalbediengerät für die Ein- und/oder Auslagerung einer Ware bzw. eines Warenträgers ansteuert. Mittels der Steuerung kann eine Befehlsfolge im Speicher vorgegeben bzw. in den Speicher eingebracht werden, die eine Handhabung der Ware einzeln oder auf bzw. in einem Warenträger im Regal ermöglicht. Sofern eine Befehlsfolge beschrieben wird, so ist hierunter nicht nur ein linearer Ablauf einer Befehlsfolge zu verstehen, sondern auch ein modularer Ablauf von Befehlsfolgen. Je nach Zutreffen von bestimmten Bedingungen kann eine Befehlsfolge bzw. ein Modul abgearbeitet werden, so dass Sprünge und/oder Verzweigungen in der Befehlsfolge möglich sind. Insbesondere kann die Steuerung einen Bereich im Speicher mit einer Befehlsfolge aufweisen, der für die Grundfunktion der Ein- und Auslagerung mittels der Vorrichtung bzw. des Regalbediengeräts vorgesehen ist und für deren Änderung es größerer Rechte ("Administrator-Rechte") bedarf als die Änderungen der Steuerung, die beispielsweise den Bereich umfassen, wo eine Ware und/oder ein Warenträger abgelegt ist, wo freie Bereiche im Regal vorhanden sind, wieviel eine Ware kostet und/oder wer zur Abholung einer Ware bzw. eines Guts berechtigt ist.

Ein Warenträger kann zur zumindest teilweisen Aufnahme einer Ware ausgestaltet sein. Bei einem Warenträger kann es sich um einen Behälter oder ein Behältnis handeln, in den bzw. das Ware zumindest teilweise aufgelegt, abgelegt, oder eingesteckt oder in anderer Weise an diesem angeordnet werden kann. Vorzugsweise kann ein Warenträger eine steife und/oder starre Hülle aufweisen. Ein Warenträger kann als Material Pappe, Karton oder Kunststoff aufweisen, wodurch ein stabiles, gut verarbeitbares und/oder langlebiges Material verwendet werden kann. Ein Warenträger kann eine chaotische Anordnung der Ware bzw. mehrerer Waren in oder an dem Warenträger ermöglichen. Der Warenträger kann ermöglichen, eine Ware in einer vorgegebenen relativen Lage zum Warenträger aufzunehmen, so dass bei Kenntnis der Ausrichtung des Warenträgers im Regal eine Ausrichtung der Ware zum Regal in mindestens einer Raumrichtung erreicht werden kann. Mittels eines Warenträgers kann eine Ware in einer vorgegebenen Ausrichtung und/oder Lage relativ zum Regal bzw. Regalboden in mindestens einer Raumrichtung, vorzugsweise zwei Raumrichtungen, insbesondere drei Raumrichtungen, ausgerichtet werden. Es ist insbesondere möglich, dass mehrere Waren an bzw. in einem Warenträger angeordnet sind, so dass durch Aufnahme bzw. Handhabung des Warenträgers eine gemeinsame Handhabung der Waren mittels der Vorrichtung bzw. des Regalbediengeräts möglich ist. Es ist möglich, dass die Vorrichtung bzw. das Regalbediengerät Ware von einem Warenträger abnehmen und einzeln handhaben kann. Es ist möglich, dass die Vorrichtung bzw. das Regalbediengerät Ware, die aus oder von einem Warenträger gegriffen und aufgenommen wurde, einem anderen Warenträger mittelbar oder unmittelbar zuführen kann.

Ein Warenträger kann ein Behälter oder Behältnis sein, welcher bzw., welches eine von außen zugängliche Ausnehmung aufweist, in dem die Ware bzw. das Gut zumindest teilweise angeordnet werden kann. Die Ausnehmung kann eine Öffnung aufweisen, die einen freien Zugriff auf die Ausnehmung erlaubt. Es kann alternativ oder zusätzlich vorgesehen sein, dass am Rand der Öffnung eine Abdeckung zur zumindest teilweisen Abdeckung der Ausnehmung vorgesehen ist. Es kann vorgesehen sein, dass Kontaktmittel am Rand der Öffnung vorhanden sind, mittels derer ein Kontakt möglich ist, obwohl die Öffnung und/oder die Ausnehmung geringfügig größer sein kann als die Erstreckung der Ware bzw. des Guts. Es ist beispielsweise möglich, dass am Rand der Öffnung ein Besatz mit Naturfasern, Kunstfasern, einem elastischen Kunststoff oder einem flexiblen Draht vorgesehen ist, welcher sich in die Öffnung erstreckt und der ausgestaltet ist, bei einem Einführen von Ware bzw. Gut auszuweichen, um bei eingefügter Ware bzw. Gut an der Ware bzw. dem Gut anzuliegen.

Eine Öffnung einer Ausnehmung am Warenträger kann bevorzugt von oben - und damit von einer einer Grundfläche gegenüberliegenden Seite - von außen zugänglich sein.

Ein Warenträger kann eine Grundfläche aufweisen, die jedwede Form haben kann. Eine rechteckförmige Grundfläche ist aufgrund einer verbesserten Flächenausnutzung bevorzugt. Es kann vorgesehen sein, dass der Warenträger am Boden zum Aufstand auf einem Regalboden oder einem sonstigen Untergrund Füße aufweisen kann. Es kann vorgesehen sein, dass ein Warenträger unmittelbar mit seiner Unterseite, insbesondere einer Grundfläche, auf einem Regalboden oder einem sonstigen Untergrund aufstehen kann.

Ein Warenträger kann jedwede dreidimensionale Form aufweisen. Ein Warenträger kann eine im Wesentlichen quaderförmige Außenkontur aufweisen. Eine korb-, trog- und/oder wannenförmige Ausgestaltung kann aufgrund einer einfachen und kostengünstigen Herstellung bevorzugt sein. Ein Warenträger kann wannenförmig ausgestaltet sein. Ein Warenträger kann jedwede Form aufweisen. Eine Ausnehmung am Warenträger kann genau einer Ware oder genau einem Gut zugeordnet sein; es kann vorgesehen sein, dass eine Ausnehmung mehrere Waren bzw. Güter aufnehmen kann. In einer Ausnehmung können bevorzugt mehrere Waren nebeneinander längs der Erstreckung der Ausnehmung angeordnet werden. In einer bevorzugten Ausführungsform sind mehrere Ausnehmungen am Warenträger vorhanden, die im Wesentlichen parallel zueinander angeordnet sein können. Für eine gute Gewichtsverteilung am Warenträger kann eine mittige Ausnehmung vorgesehen sein. Es kann vorgesehen sein, dass mehrere Ausnehmungen am Warenträger ausgestaltet sind, die symmetrisch am Warenträger zueinander angeordnet sein können, insbesondere zu einem Mittelpunkt und/oder einer Mittellinie des Warenträgers.

Ein Warenträger kann variabel und/oder modulartig aufgebaut sein. Insbesondere kann ein Warenträger eine Grundfläche aufweisen, auf der wannen-, korb- oder trogförmige Aufbauten modulartig aufgesetzt und/oder verrastet werden können, um in dem bzw. den wannen-, korb- oder trogförmigen Aufbauten eine oder mehrere Ausnehmungen vorzusehen, in die die Ware bzw. das Gut eingesteckt bzw. eingeführt werden kann. Auf dem Bereich der Grundplatte, der nicht mit einem Aufbau versehen ist, kann Ware und/oder Gut abgelegt werden, insbesondere chaotisch. Mittels eines modulartig zusammenstellbaren Warenträgers kann eine hohe Flexibilität erreicht werden.

In einem Warenträger kann die Ware bzw. das Gut derart angeordnet sein, dass eine bessere Raumnutzung möglich ist, wobei die Flexibilität die Ware einzeln oder zusammen mit dem Warenträger zu handhaben erhalten bleiben kann. Bevorzugt kann die Ware bzw. das Gut von oben in eine Ausnehmung eines Warenträgers eingeführt werden, so dass die Ware bzw. das Gut hochkant stehend bzw. auf einer Schmalseite stehend angeordnet sein kann.

Mittels eines Warenträgers kann eine verbesserte Handhabung der Ware bzw. des Guts ermöglicht werden, bspw. indem die Ware bzw. das Gut in einer Vorzugsrichtung für die Aufnahme mittels der Vorrichtung bzw. des Regalbediengeräts ausgerichtet ist. Es kann möglich sein, dass Ware in einem Warenträger aufrecht bzw. nahezu aufrecht stehen kann, die ohne Anordnung im Warenträger nicht stehen könnte.

Ein Warenträger kann auch eine verbesserte optische und/oder anderweitig sensorisch erfassbare Erkennung der Ware bzw. des Guts ermöglichen, indem bspw. die Ware bzw. das Gut ausgerichtet und/oder vereinzelt ist und mittels eines Sensors abgetastet werden kann. Ein Warenträger kann demnach für eine verbesserte Erkennung der Ware bzw. des Guts verwendet werden.

Ein Warenträger kann auch für eine Bewegung von mehreren Waren im Warenlager verwendet werden, um bspw. mehrere Waren bzw. Güter zwischen unterschiedlichen Bereichen des Warenlagers zu bewegen bzw. zirkulieren lassen zu können. Es kann vorgesehen sein, dass die aus einem gekühlten Bereich des Warenlagers angeforderten Waren zusammen auf einem Warenträger in einen anderen Bereich des Warenlagers bewegt werden, der bspw. ein als "Trockenbereich" identifizierter Bereich ist, in dem keine Kühlung vorgesehen sein kann.

Mittels eines Warenträgers kann auch für den Fall, dass Ware am Auslagerfenster nicht entnommen wird, und diese Ware bspw. zumindest teilweise Kühlprodukte enthält, der Warenträger direkt im Kühlbereich eingelagert werden, um die Kühlkette nicht zu unterbrechen. Ein Warenträger kann bei einem erneuten Versuch der Abholung wieder zum Auslagerfenster bewegt werden.

Das Regal kann mehrere Regalböden aufweisen. Die Regalböden können vertikal und/oder horizontal zueinander angeordnet sein. Die Ware kann auf einem Regalboden derart abgelegt werden, dass die Regalböden in zumindest virtuell unterteilten Kanälen, die nebeneinander in Längsrichtung des Regalbodens vorliegen können, abgelegt werden können. Insbesondere können gleichartige bzw. gleiche Waren in einem Kanal hintereinander, insbesondere quer zur Längsrichtung des Regalbodens, angeordnet werden. Eine chaotische Lagerung von Ware ist möglich.

In einer bevorzugten Ausführungsform sind auf einem Regalboden sowohl Ware als auch mindestens ein Warenträger angeordnet. Hierdurch wird die Möglichkeit geschaffen, dass nicht nur Ware und Warenträger in ein und demselben Regal abgelegt werden können, sondern dass sowohl die Ware als auch ein Warenträger auf ein und demselben Regalboden angeordnet werden können. Die Zugriffszeiten können angepasst werden bzw. Kriterien für die Sortierung in dem Warenlager sind möglich, die über die Einordnung "Ware" oder "Warenträger" hinausgehen. Das Warenlager kann effizient genutzt werden.

Ein Warenträger kann dazu dienen bzw. verwendet werden, eine Bestellung, die, aus welchen Gründen auch immer, nicht entnommen wurde, wieder in das Warenlager einzulagern. Es kann vorgesehen sein, dass die wieder eingelagerte Ware zu einem späteren Zeitpunkt wieder auf Anforderung ausgelagert werden kann. Es kann für den Fall, dass es sich um verderbliche Ware oder um Ware, die möglichst nicht anderen gegenüber exponiert werden soll, handelt, vorgesehen sein, dass ein Warenträger mit der Ware einer speziellen Position im Warenlager zugeführt werden kann, die bspw. für eine Ausgabe blockiert ist, da nicht ausgeschlossen werden kann, dass die Ware verdorben ist und/oder der ursprünglich Anfordernde die Ware bzw. das Gut manipuliert hat. Eine von der Ausgabe gesperrte Ware bzw. Gut kann im Zuge von Befüllungs- /Wartungsroutinen aus dem Warenlager entfernt werden.

Es kann vorgesehen sein, dass ein Warenträger zusammen mit der Ware ausgegeben werden kann. Es kann aber auch vorgesehen sein, dass ein Warenträger im automatischen Warenlager verbleibt und nur die Ware ausgegeben wird.

Die Ausführungen zu den einzelnen Aspekten der Erfindung, wie sie in Bezug auf die Vorrichtung und das Verfahren zum Bewegen von Ware in einem automatischen Warenlager beschrieben werden, sind als einander ergänzende Ausführungen zu verstehen. Ausführungen zu einem der Aspekte gelten auch für die Ausführungen für den anderen Aspekt.

Die vorstehenden Ausführungen stellen ebenso wie die nachfolgende Beschreibung beispielhafter Ausführungsformen keinen Verzicht auf bestimmte Ausführungsformen oder Merkmale dar.

Die Erfindung wird nachfolgend anhand eines in den Zeichnungen dargestellten Ausführungsbeispiels näher erläutert.

In den Zeichnungen zeigt:
- Fig. 1: eine schematische Darstellung eines automatischen Warenlagers mit einer als Regalbediengerät ausgestalteten Vorrichtung zum Bewegen von Ware und einem Regal;
- Fig. 2: eine schematische Darstellung der Vorrichtung zum Bewegen von Ware in einer vergrößerten Darstellung gemäß einer ersten Ausführungsform; und
- Fig. 3: eine schematische Darstellung der Vorrichtung zum Bewegen von Ware in einer vergrößerten Darstellung gemäß einer weiteren Ausführungsform.

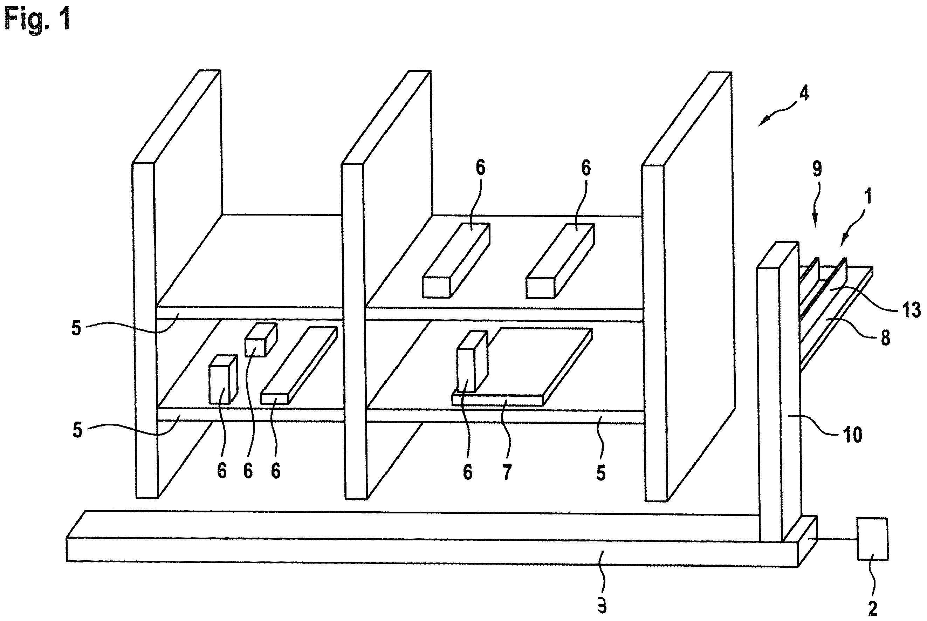

Figur 1 zeigt schematisch in einer isometrischen Darstellung ein automatisches Warenlager mit einer Vorrichtung 1 zum Bewegen von Ware 6. Die Vorrichtung 1 zum Bewegen von Ware ist Teil eines Regalbediengeräts, welches mittels einer Steuerung 2 gesteuert werden kann. Die Vorrichtung 1 zum Bewegen von Ware 6 läuft auf einer Schiene 3 vor einem Regal 4 entlang. Das Regal 4 weist Regalböden 5 auf, auf denen Ware 6 direkt aufliegen kann.

Auf dem in der Figur 1 gezeigten rechten unteren Regalboden 5 ist die Ware 6 in einem Warenträger 7 angeordnet und steht damit nicht direkt auf dem Regalboden 5 auf, sondern mittelbar über den Warenträger 7. Damit ist in dem Regal 4 sowohl Ware 6 als auch ein Warenträger 7 angeordnet. Es kann vorgesehen sein, dass auf einem Regalboden 5 des Regals 4 sowohl eine Ware 6 als auch ein Warenträger (mit oder ohne Ware 6) angeordnet sein kann.

Mittels der Vorrichtung 1 zum Bewegen von Ware kann sowohl die Ware 6 als auch der Warenträger 7 im Regal 4 gehandhabt werden.

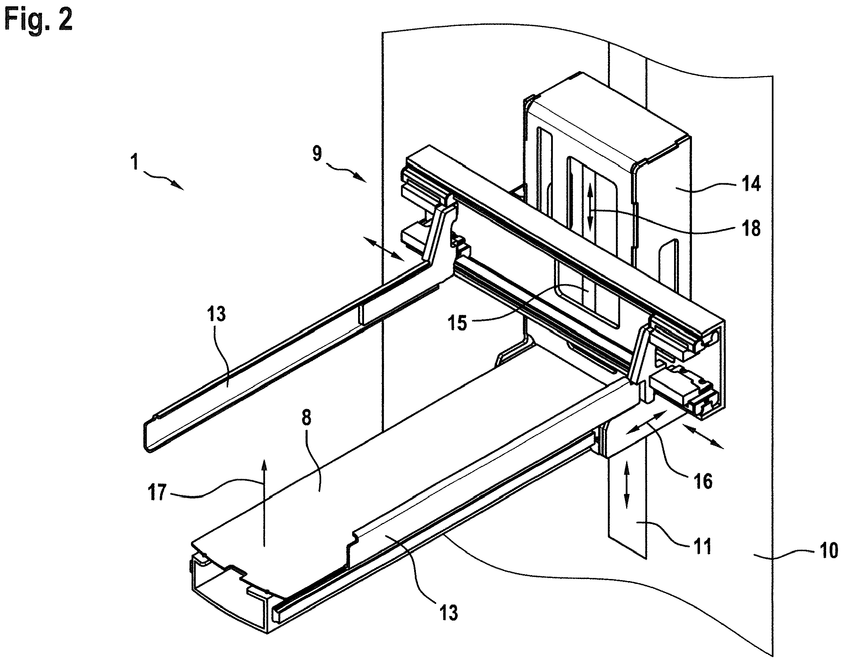

Figur 2 zeigt in einer vergrößerten Darstellung schematisch die Vorrichtung 1 zum Bewegen von Ware gemäß einer ersten Ausführungsform. Die Vorrichtung 1 weist eine Plattform 8 und einen Manipulator 9 auf. Der Manipulator 9 ist als (Backen-)Greifer ausgestaltet mit zwei im Wesentlichen horizontal verfahrbaren Backen 13.

Die Plattform 8 ist an einer Säule 10, die auf der Schiene 3 entlang des Regals 4 bzw. Regalböden 5 verfahren kann beweglich befestigt. Die Plattform 8 kann an einer Schiene 11, die an der Säule 10 befestigt ist und sich in vertikaler Richtung erstreckt (in Längsachse der Säule 10) in der Höhe verfahren werden. Die Plattform 8 kann damit in einer Richtung verfahren werden, die im Wesentlichen der Richtung einer Flächennormalen der Plattform 8 verläuft, die in der Fig. 2 visualisiert und mit dem Bezugszeichen 17 versehen ist.

Der Manipulator 9 ist an der Plattform 8 beweglich befestigt. Der Manipulator 9 weist einen Mast 14 oder eine Säule auf, an dem die Backen 13 einzeln oder zusammen vertikal verfahren werden können. Die bei den Backen 13 gezeigten Doppelpfeile geben an, dass die Backen 13 aufeinander zu, voneinander weg, zusammen in eine der Richtungen oder einzeln für sich in eine der Richtungen bewegt werden können.

Der Mast 14 oder die Säule des Manipulators 9 kann gegenüber der Plattform 8 parallel in Richtung von der Säule 10 weg oder auf die Säule 10 zu verfahren werden, um den Manipulator 9 an eine Ware 6 heranzuführen bzw. von der Ware 6 weg zu bewegen ohne die Plattform 8 zu bewegen. Der Mast 14 kann auf der Plattform 8 vor oder zurück bewegt werden, welches durch einen mit Bezugszeichen 16 versehenen Doppelpfeil verdeutlicht ist.

Die Backen 13 können gegenüber der Plattform 8 vertikal an dem Mast 14 oder der Säule an einer Schiene 15 oder ähnlichem verfahren werden, welches durch einen Doppelpfeil 18 visualisiert ist. Die Backen 13 können damit im Wesentlichen in einer Richtung parallel zur Flächennormalen 17 der Plattform 8 bewegt werden.

Die Mechanik zum Bewegen der Backen 13 des als (Backen-)Greifer ausgestalteten Manipulators 9 ist an dem Mast 14 angeordnet.

Plattform 8 und Manipulator 9 können sowohl zusammen ohne eine zusätzliche Relativbewegung zwischen Plattform 8 und Manipulator 9 bewegt werden als auch relativ zueinander, wobei der Manipulator 9 insbesondere in der Höhe bzw. in Richtung der Erdbeschleunigung relativ zur Plattform 8 bewegt werden kann. Insbesondere beim Absetzen oder Anheben von Ware 6 kann eine Bewegungskomponente auf die Ware 6 aufgeprägt werden, die im Wesentlichen in Richtung der Erdbeschleunigung und damit im Wesentlichen parallel zur Flächennormale 17 der Plattform 8 ist, wodurch die Ware 6 angehoben oder abgesenkt werden kann.

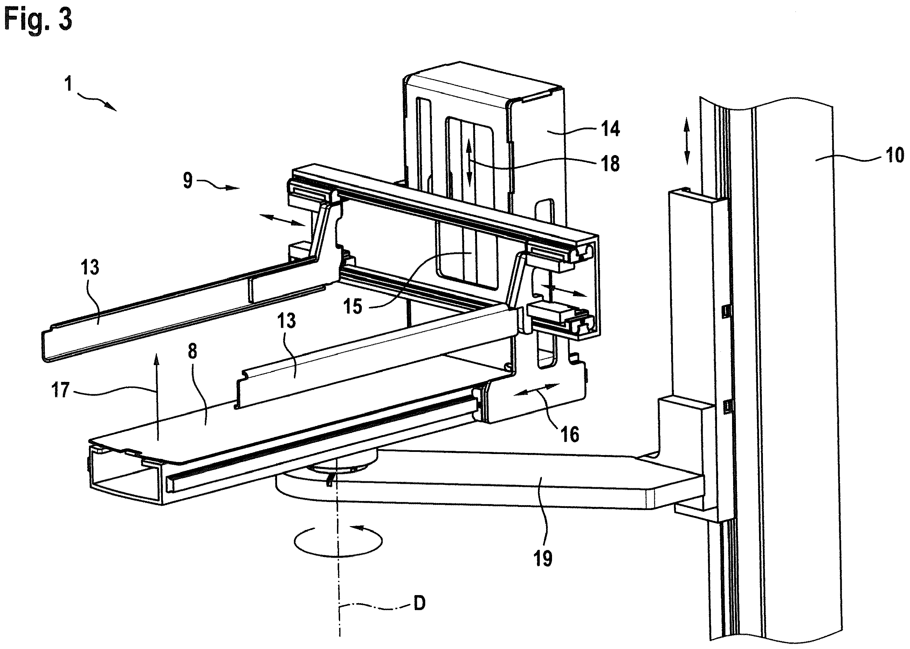

Figur 3 zeigt eine weitere Ausführungsform einer Vorrichtung 1 zum Bewegen von Ware 6 in einer vergrößerten Darstellung. Gleiche Elemente wie in Figur 2 sind mit dem gleichen Bezugszeichen versehen. Der wesentliche Unterschied zur Ausführungsform gemäß Figur 2 ist die Anlenkung der Plattform 8 an die Säule 10. Die Plattform 8 kann um eine Drehachse D gedreht werden, so dass sowohl Plattform 8 als auch Manipulator 9 um den gleichen Winkel im Raum gedreht werden können. Die Ausführungsform der Figur 3 weist dazu einen Schwenkarm 19 auf, der sich mit einem Abschnitt quer von der Säule 10 erstreckt. Ferner weist der Schwenkarm 19 einen Abschnitt auf, der sich in eine Richtung erstreckt, die mit der Drehachse D zusammenfällt und im Wesentlichen parallel zur Flächennormalen 17 der Plattform 8 verläuft.

Die Plattform 8 kann mittels einer Bewegung des Schwenkarms 19 entlang der Säule 10 in der Höhe (in Längsrichtung der Säule 10) verfahren werden. Um die Drehachse D kann die Plattform 8 und der auf der Plattform 8 angeordnete Manipulator 9 im Raum gedreht werden, so dass Regale unterschiedlicher Ausrichtung, das heißt beispielsweise Regale, die einander gegenüber liegen, angefahren und die Ware 6 mittels der Vorrichtung 1 gehandhabt werden kann.

## Patentansprüche

1. Vorrichtung (1) zum Bewegen von Ware (6) in einem automatischen Warenlager, wobei die Vorrichtung (1) einen Manipulator (9) zum Bewegen von Ware (6) und eine Plattform (8) zur Ablage von Ware (6) aufweist, wobei die Vorrichtung (1) ausgestaltet ist,
a) den Manipulator (9) und die Plattform (8) gemeinsam zu bewegen und
b) den Manipulator (9) relativ zur Plattform (8) in einer Richtung zu bewegen, die eine Komponente in Richtung einer Flächennormalen der Plattform aufweist.

2. Vorrichtung (1) nach Anspruch 1, wobei die Bewegung des Manipulators (9) relativ zur Plattform (8) zumindest abschnittsweise bogenförmig ist.

3. Vorrichtung (1) nach Anspruch 1 oder 2, wobei der Manipulator (9) einen Greifer aufweist.

4. Vorrichtung (1) nach einem der Ansprüche 1 bis 3, wobei der Manipulator (9) für ein Ausführen einer Bewegung ausgestaltet ist, die von einer translatorischen Bewegung abweicht.

5. Vorrichtung (1) nach einem der Ansprüche 1 bis 4, wobei die Vorrichtung (1) ausgestaltet ist, bei einer gemeinsamen Bewegung von Manipulator (9) und Plattform (8) eine Andruckkraft von dem Manipulator (9) auf die Plattform (8) auszuüben.

6. Vorrichtung (1) nach einem der Ansprüche 1 bis 5, wobei der Manipulator (9) ausgestaltet ist, die Ware (6) mittels einer Abstreifbewegung abzulegen.

7. Verfahren zum Bewegen von Ware (6) in einem automatischen Warenlager, wobei die Ware (6) mittels einer Vorrichtung (1) bewegt wird, die einen Manipulator (9) zum Bewegen von Ware (6) und eine Plattform (8) zur Ablage von Ware (6) aufweist, wobei a) der Manipulator (9) und die Plattform (8) gemeinsam bewegt werden und b) der Manipulator (9) relativ zur Plattform (8) in einer Richtung bewegt wird, die eine Komponente aufweist, die mit der Richtung einer Flächennormalen der Plattform (8) zusammenfällt.

8. Verfahren nach Anspruch 7, wobei die Ware (6) mittels des Manipulators (9) relativ zur Plattform (8) zumindest abschnittsweise bogenförmig bewegt wird.

9. Verfahren nach Anspruch 7 oder 8, wobei die Ware (6) von dem Manipulator (9) um eine Achse, die durch die Ware (6) verläuft, gedreht wird.

10. Verfahren nach einem der Ansprüche 7 bis 9, wobei als Manipulator (9) ein Greifer verwendet wird.

11. Verfahren nach einem der Ansprüche 7 bis 10, wobei zwischen Manipulator (9) und Plattform (8) bei einer gemeinsamen Bewegung eine Andruckkraft ausgeübt wird.

12. Verfahren nach einem der Ansprüche 7 bis 11, wobei beim Ablegen der Ware (6) der Manipulator (9) die Ware (6) abstreift.
